# EUROPÄISCHE PATENTSCHRIFT

(11) **EP 3 412 244 B1**
(45) Veröffentlichungstag und Bekanntmachung des Hinweises auf die Patenterteilung: **28.07.2021**
(21) Anmeldenummer: 18176590.0
(22) Anmeldetag: 07.06.2018
(51) Int. Cl.: A61C 1/12, A61C 1/06

(54) **DENTALES HAND- ODER WINKELSTÜCK**
DENTAL HAND OR ANGLE PIECE
PIÈCE À MAIN OU D'ANGLE DENTAIRE

(30) Priorität: 07.06.2017 DE 102017209613
(43) Veröffentlichungstag der Anmeldung: 12.12.2018
(73) Patentinhaber: Sirona Dental Systems GmbH, 64625 Bensheim (DE)
(72) Erfinder: Ertugrul, Metin, 64295 Darmstadt (DE); Rein, Matthias, 64653 Lorsch (DE); Gerlach, Jan Paul, 64295 Darmstadt (DE); Sutter, Ralf, 69469 Weinheim (DE)
(74) Vertreter: Özer, Alpdeniz

(56) Entgegenhaltungen:
- JP-A- H11 188 047
- US-A- 4 341 520
- US-A- 5 779 474
- US-B1- 6 790 039

## Beschreibung

### Technisches Gebiet

Die Erfindung betrifft ein Verfahren zum Herstellen eines dentalen Hand- oder Winkelstücks mit einem rotierenden Werkzeug, welches über ein in einem Gehäuse angeordnetes rotierendes Antriebselement angetrieben ist.

### Stand der Technik

In heutigen dentalen Hand- und Winkelstücken erfolgt die Lagerung der rotierenden Antriebselemente üblicherweise mit der Hilfe von Wälzlagern. Der Antriebsstrang von Winkelstücken besteht oft aus drei Getriebestufen, im Folgenden auch als Trieb bezeichnet, nämlich der Antriebswelle mit einer Kupplung zum Motor, einem Zwischen- oder Halstrieb und einem Kopftrieb mit einer Spannvorrichtung für dentale Werkzeuge.
Üblicherweise werden die Wälzlager auf den jeweiligen Trieben durch beispielsweise einen radialen Presssitz vormontiert. Die Lageraußenringe werden im Gehäuse aufgenommen und üblicherweise mit der Hilfe von Wellfederscheiben in axialer Richtung vorgespannt. Dabei führen fertigungsbedingte Toleranzen stets auch zu einer Schwankung des Einbauraums der Triebe. In axialer Richtung führen die Fertigungstoleranzen zu einer Schwankung der axialen Vorspannung der Wälzlager. In radialer Richtung führen die Fertigungstoleranzen einer Schwankung des radialen Spiels und damit zu einem eventuell gestörten Zahneingriff in der Getriebestufe. Beides kann einen erheblichen Einfluss auf die Lebensdauer der Wälzlager haben und gilt es deshalb so gering wie möglich zu halten.

Die axialen Vorspannkräfte führen stets auch zu einer Reibkraft quer zur Drehrichtung des Triebes. Diese Reibkräfte halten den Kopftrieb bei Erschütterungen in Position und verhindern damit Relativbewegungen zwischen Wälzlager und Gehäuse. Die Reibkräfte an beiden Wälzlagern hängen unter anderem von der Federrate der Wellfederscheibe und von dem Vorspannweg ab.

Die Erschütterungen können dabei unterschiedliche Ursachen haben. Sie können bei der Präparation durch einen unregelmäßigen Abtrag direkt am Bohrer entstehen oder durch eine vorhandene Unwucht der Bohrer oder der Kopftriebe selbst entstehen. Werden die Erschütterung zu stark, kann es dazu führen, dass der gesamte Trieb inklusive der Wälzlager eine Relativbewegung zum Gehäuse ausführt.

Eine Erhöhung der axialen Vorspannkräfte der Wälzlager kann zu einer Verbesserung führen. Dies ist jedoch nur in einem sehr begrenzten Umfang möglich, da der empfohlene Bereich für die Lagervorspannkraft im Allgemeinen in einem sehr engen Bereich liegt.

Eine Reduzierung der Fertigungstoleranzen kann zu einer Reduzierung der Bewegungsfreiheit der Kugellager und damit zu einer Verbesserung führen. Dies ist jedoch oft nur mit einem erheblichen Kostenaufwand zu erreichen.

Zur Geräuschreduzierung ist es auch bekannt, gummielastische O-Ringe zwischen dem Gehäuse und den Wälzlageraußenringen anzuordnen. Der Einsatz von radial wirkend gummielastischen O-Ringen kann dann zu einer Dämpfung der Erschütterungen führen, erfordert jedoch einen deutlich höheren Platzbedarf.

US4341520A sowie JPH11188047A offenbaren jeweils ein zahnärztliches Handstück mit einem O-ring.

Mit der vorliegenden Erfindung soll einer reduzierten Lebensdauer sowie einem erhöhten Laufgeräusch der Wälzlager, wie sie beispielsweise durch die Belastungen durch Erschütterungen hervorgerufen wird, entgegengewirkt werden.

### Darstellung der Erfindung

Erfindungsgemäß werden die genannten Probleme durch ein Verfahren zum Herstellen eines dentalen Hand- oder Winkelstücks mit den Merkmalen des Anspruchs 1 gelöst. Vorteilhafte Weiterbildungen ergeben sich aus den abhängigen Ansprüchen.

Die angegebene Erfindung beeinflusst gezielt die Einflussgröße Reibungskoeffizient, insbesondere Haftreibungskoeffizient zwischen den Kontaktpartnern wie beispielsweise zwischen Wälzlageraußenring und Gehäuse sowie Wälzlageraußenring und Wellfederscheibe. Dadurch können größere Erschütterungen aufgefangen und somit nennenswerte Relativbewegungen des Kugellagers zum Gehäuse verhindert oder zu mindestens reduziert werden.

Erfindungsgemäß werden die Flächen aufgeraut, die in axialer Richtung zwischen den Kugellageraußenringen und dem Gehäuse liegen. Die Erhöhung des Reibungskoeffizienten erfordern keinen oder einen nur sehr geringen zusätzlichen Bauraum.

So werden beispielsweise die Stirnseite des Wälzlageraußenrings, die mit dem Gehäuse im Kontakt steht sowie die Kontaktfläche des Gehäuses selbst aufgeraut. Die erhöhte Rauigkeit führt dazu, dass bei gleichbleibender axialer Vorspannung der Wälzlager die übertragbaren Reibkräfte deutlich gesteigert werden können.

Gemäß einer vorteilhaften Weiterbildung können die sich berührenden Flächen metallisch, vorzugsweise aus Stahl sein. Dies hat den Vorteil, dass bekannte Werkstoffe für das Wälzlager, das Gehäuse und das Federelement verwendet werden können.

Gemäß einer vorteilhaften Weiterbildung können die sich berührenden Flächen eine Oberflächenrauigkeit Rz von mindestens 4,0 µm und/oder eine Profiltiefe Pt von mindestens 8 µm aufweisen, was zu einem Reibungskoeffizienten gemäß der Erfindung führt. Vorzugsweise kann Rz größer gleich 5 µm sein und besonders bevorzugt liegt Rz im Bereich von 8,0 µm - 14,0 µm.

Die gröbste Drehbearbeitung ohne Oberflächenbearbeitung führt zu einer Oberflächenrauigkeit Rz, die unterhalb von Rz = 4,0 µm bleibt. Durch Strahlen mit Strahlkugeln wird ein Rz von etwa 5 µm bis 6 µm erreicht, durch Strahlen mit Korund lässt sich ein Rz-Wert von 12,5 µm bis 13,0 µm erreichen. Insbesondere dann, wenn die Bauteile zu klein sind, um Rz-Werte bestimmen zu können, kann die Profiltiefe Pt gemessen werden. Als geeignete Profiltiefe hat sich eine Profiltiefe Pt von mindestens 8,0 µm, vorzugsweise von 12,0 µm - 18,0 µm erwiesen. Die Pt-Werte lassen sich unabhängig von den Rz-Werten bestimmen.

Je höher die Werte Rz und Pt, desto besser im Sinne der Erfindung. Dennoch kann man die Oberflächenrauigkeit nicht beliebig erhöhen, weil das zu einer Verschlechterung der Bauteilgenauigkeit führt und diese Verschlechterung das gewünschte Ergebnis beeinträchtigen kann. In dem angegebenen Bereich für die Werte Rz und Pt wurde eine besonders vorteilhafte Wirkung erzielt. Gemäß einer vorteilhaften Weiterbildung kann der Reibungskoeffizient durch Auswahl der Materialpartner wie folgt bereitgestellt ist:
- Metall/Metall
- Metall/Keramik
- Keramik/Keramik
- Kunststoff/Metall
- Kunststoff/Keramik

Bei Materialpartnern Metall/Metall lässt sich durch Aufrauen der Oberflächen auf einfache und kostengünstige Weise eine zumindest ausreichende Steigerung des Reibungskoeffizienten erreichen, auch wenn die Genauigkeit der Lageranordnung etwas beeinträchtigt wird.

Bei Materialpartnern Metall/Keramik lässt sich durch eine Keramikscheibe bei präziser Genauigkeit auf kostengünstige Weise eine hohe Steigerung des Reibungskoeffizienten erreichen, auch wenn durch das zusätzliche Bauteil die Handhabung schwieriger wird.

Bei Materialpartnern Keramik/Keramik lassen sich sehr hohe Reibungskoeffizienten erreichen, allerdings bestehen dann die an sich bekannten Bauteile aus einem bislang für diese Anwendungsfälle wenig erprobten Werkstoff.

Bei Materialpartnern Metall/Kunststoff lässt sich durch eine Kunststoffscheibe auf einfache und kostengünstige Weise eine hohe Steigerung des Reibungskoeffizienten erreichen, allerdings wird die Genauigkeit der Lageranordnung deutlich beeinträchtigt und die Lebensdauer ist durch das Kriechverhalten reduziert, was zu einem Verlust an Vorspannung des Lagers führen kann.

Bei Materialpartnern Metall/Kunststoff lässt sich durch eine Kunststoffbeschichtung auf einfache und kostengünstige Weise eine hohe Steigerung des Reibungskoeffizienten erreichen, ohne dass die Genauigkeit der Lageranordnung so stark beeinträchtigt wird wie bei einer Scheibe. Die Lebensdauer ist aber nach wie vor durch das Kriechverhalten reduziert, was zu einem Verlust an Vorspannung des Lagers führen kann.

Bei Materialpartnern Kunststoff/Keramik lässt sich durch Bauteile aus diesen Materialien eine hohe Steigerung des Reibungskoeffizienten erreichen, allerdings bestehen dann die an sich bekannten Bauteile aus einem bislang für diese Anwendungsfälle wenig erprobten Werkstoff und wird die Genauigkeit der Lageranordnung beeinträchtigt und die Lebensdauer ist durch das Kriechverhalten reduziert, was zu einem Verlust an Vorspannung des Lagers führen kann. Trotz aller Nachteile lässt sich mit jeder dieser Paarung von Materialpartnern eine Verbesserung des bekannten Standes der Technik erreichen. Vorteilhafterweise kann mindestens eine der sich berührenden Flächen als Teil einer Beschichtung mit höherem Reibungskoeffizienten auf einem Grundwerkstoff ausgebildet sein. Als Beschichtung kommen insbesondere Kunststoff oder Titan infrage.

Erfindungsgemäß weisen die Wälzlager je einen Außenring mit einer Stirnseite auf, die als Anlagefläche ausgebildet sind und mit der Gegenfläche des Gehäuses im Kontakt stehen, wobei sowohl die Anlageflächen auf der Stirnseite als auch die Gegenfläche am Gehäuse im Vergleich zu den übrigen axialen Flächen aufgeraut sind, insbesondere zu den axialen Flächen, die nicht im Kraftfluss liegen.

Zusätzlich oder alternativ zu den axialen Flächen können auch radiale Flächen einen durch Aufrauen erhöhten Reibungskoeffizienten aufweisen, etwa die äußere zylindrische Mantelfläche der Kugellager. Dies kann unter Umständen fertigungstechnische Vorteile mit sich bringen, weil beim Aufrauen zwischen den Flächen nicht unterschieden werden muss und ein Abdecken oder Isolieren beim Aufrauen durch Strahlen nicht erforderlich ist.

Erfindungsgemäß ist ein Zwischenelement, insbesondere eine Wellfederscheibe als Kontaktpartner zwischen dem Außenring des Wälzlagers und dem Gehäuse vorgesehen, welches über seine Kontaktflächen vorzugsweise einen höheren Reibungskoeffizienten mit der Anlagefläche und der Gegenfläche als die Anlagefläche und die Gegenfläche zueinander aufweist.

Als Zwischenelement kommt beispielsweise eine Passscheibe oder eine Federscheibe oder weitere Scheiben, etwa eine Reibscheibe, eine Haftscheibe oder eine Bremsscheibe in Betracht. Erfindungsgemäß wird ein Federelement verwendet.

Vorteilhafterweise kann das Zwischenelement aus einem Werkstoff mit höherem Reibungskoeffizienten an den axialen Kontaktflächen zur Anlagefläche und zu der Gegenfläche bestehen, insbesondere Kunststoffe oder Keramik. Der höhere Reibungskoeffizient kann durch eine höhere Oberflächenrauigkeit oder den Einsatz einer Beschichtung bewirkt werden.

### Kurze Beschreibung der Zeichnungen

Das erfindungsgemäße Verfahren wird anhand der Zeichnung erläutert. Es zeigen:
- Fig. 1: einen Kopf eines dentalen Hand- oder Winkelstück mit einem in einer Lageranordnung rotierenden Werkzeug im Längsschnitt,
- Fig. 2: einen Außenring eines Wälzlagers aus Fig. 1 im Detail,
- Fig. 3A-D: eine schematische Explosionszeichnung der Lageranordnung aus Fig. 1;
- Fig. 4: eine alternative Anordnung eines oberen Lagers im Schnitt.

### Ausführungsformen der Erfindung

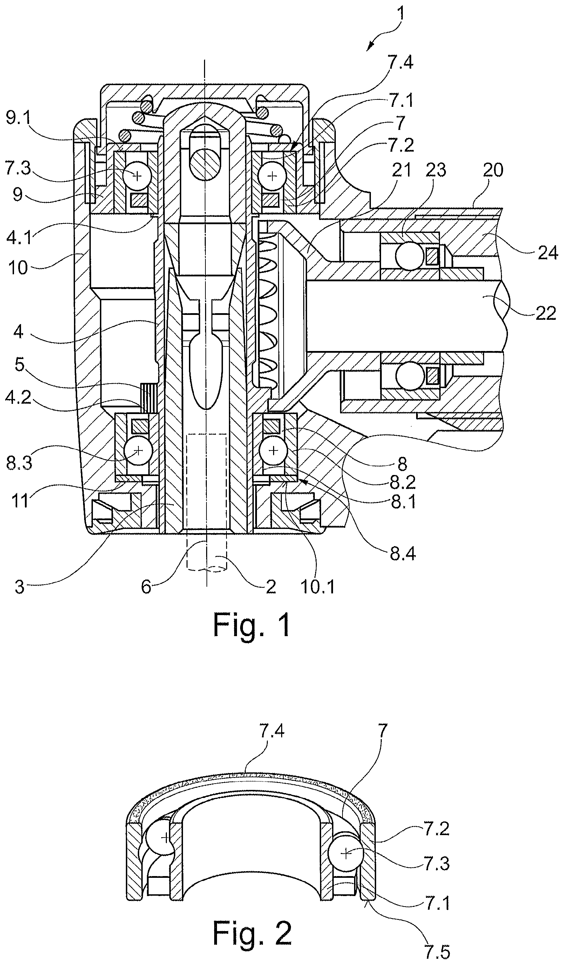

In Fig. 1 ist der Kopf 1 eines erfindungsgemäßen Hand- oder Winkelstücks mit einem in einer Lageranordnung aufgenommenen rotierenden Werkzeug 2 dargestellt.

Die Lageranordnung weist einen das Werkzeug 2 aufnehmenden hohlen Schaft 3 auf, der mit einem Antriebselement in Form einer Hülse 4 mit einer Außenverzahnung 5 verbunden ist.

Die Hülse 4 ist in Richtung einer Werkzeugachse 6 gesehen oberhalb und unterhalb der Außenverzahnung 5 mittels einem oberen Wälzlager 7 und einem in einem axialen Abstand dazu angeordneten unteren Wälzlager 8 radial und axial gelagert.

Dabei ist das obere Wälzlager 7 in einem Gehäusedeckel 9 gelagert, der mit einem Kopfgehäuse 10 verbunden ist. In diesem Kopfgehäuse 10 ist auch das untere Wälzlager 8 unmittelbar unterhalb der Außenverzahnung 5 gelagert.

Dabei ist jeweils ein Innenring 7.1, 8.1 des Wälzlagers 7, 8 an der Hülse 4 befestigt, etwa in radialer Richtung durch einen Presssitz und in axialer Richtung durch Anlage an einen radialen Bund 4.1, 4.2.

Ein Außenring 7.2, 8.2 des Wälzlagers 7, 8 ist über Wälzkörper 7.3, 8.3 mit dem Innenring 7.1, 8.1 verbunden und der Außenring 7.2, 8.2 ist unter radialem Spiel im Kopfdeckel 9 bzw. dem Gehäuse 10 radial gelagert.

Die axiale Lagerung der Außenringe 7.2, 8.2 der Wälzlager 7, 8 erfolgt über eine axiale Anlagefläche 7.4, 8.4, am Außenring 7.2, 8.2, die an einer axialen Gegenfläche 9.1, 10.1 im Kopfdeckel 9 bzw. in dem Gehäuse 10 im Falle des oberen Wälzlagers 7 unmittelbar und im Fall des unteren Wälzlagers 8 mittelbar unter Zwischenschaltung einer Wellfeder 11 anliegt.

Außer dem Kopftrieb mit der Spannvorrichtung für das Werkzeug 2 ist ein Halstrieb 20 dargestellt, der über ein Zahnrad 21, welches auf einer Welle 22 befestigt ist, die Drehung des in der Hülse 4 mit der Außenverzahnung 5 gehaltenen Werkzeugs 2 bewirkt. Die Welle 22 ist über ein Wälzlager 23 im Gehäuse 24 des Halstriebs gelagert.

In Fig. 2 ist das obere Wälzlager 7 im Detail dargestellt. Der Innenring 7.1 stützt sich über die Wälzkörper 7.3 an dem Außenring 7.2 ab und kann über die Wälzkörper radiale und axiale Kräfte übertragen. Der Außenring 7.2 weist an seinem Außenring 7.2 eine axiale Anlagefläche 7.4 auf, über die auf das Wälzlager einwirkende Axialkräfte an eine nicht dargestellte Gegenfläche übertragen werden.

Der Reibungskoeffizient für eine Werkstoffpaarung hängt von der Bearbeitungsart der Oberfläche wie beispielsweise gedreht oder geschliffen und dem Schmierungszustand beispielsweise trocken oder geölt ab. Die axiale Anlagefläche 7.4 ist zur Erhöhung des Reibwertes beispielsweise sandgestrahlt. Durch Sandstrahlen verändert sich der Bereich für den Reibungskoeffizienten µ_{H} der Haftreibung für die Werkstoffpaarung Stahl-Stahl, der in einem Bereich von ca. 0,08 < µ_{H} < 0,2 auf 0,29 < µ_{H} < 0,64.

Eine Axialfläche 7.5, die nicht im axialen Kraftfluss liegt, ist gegenüber der Anlagefläche 7.2 nicht durch Strahlen im Reibungswert erhöht.

Grundsätzlich können mehrere oder alle in axialer Richtung orientierten Kontaktflächen der Lageranordnung durch Bearbeiten mit einem erhöhten Reibungskoeffizienten ausgestattet werden, um die radiale Bewegung oder die Drehbewegung der beweglichen Bauteile der Lageranordnung zu erschweren.

Dabei kann auch eine Beschichtung einer oder mehrerer der Kontaktflächen erfolgen, hier dargestellt als durchgängige schwarze Einfärbung der Anlagefläche 7.4 gegenüber dem Grundmaterial des Außenrings 7.2.

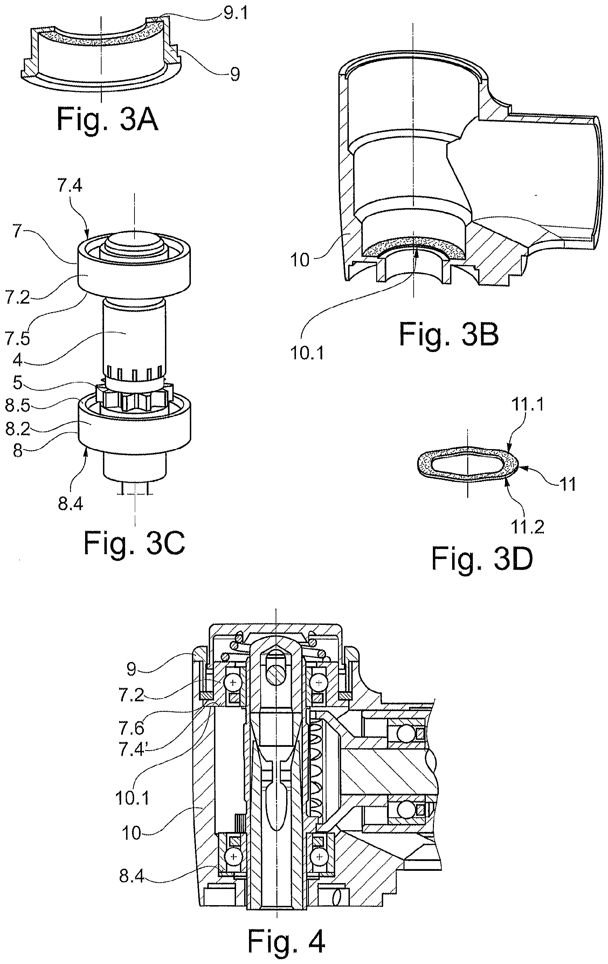

In den Fig. 3A-D ist eine schematische Explosionszeichnung der Lageranordnung aus Fig. 1 dargestellt. Fig. 3A zeigt den Gehäusedeckel 9 im Längsschnitt in einer Sicht nach schräg oben, sodass die axiale Gegenfläche 9.1 für die axiale Abstützung des oberen Wälzlagers 7 (Fig. 1) erkennbar ist. Die Gegenfläche 9.1 mit einer erhöhten Rauigkeit ausgestattet, dargestellt durch die Punkte.

Fig. 3B zeigt das Gehäuse 10 im Längsschnitt in einer Sicht nach schräg unten, sodass die axiale Gegenfläche 10.1 für die axiale Abstützung des unteren Wälzlagers 8 (Fig. 1) erkennbar ist. Auch die Gegenfläche 10.1 weist eine erhöhte Rauigkeit auf.

Fig. 3C zeigt die Hülse 4 mit ihrer Außenverzahnung 5 und dem unterhalb der Außenverzahnung 5 angeordneten unteren Wälzlager 8 und dem oberhalb der Verzahnung und in einem Abstand dazu angeordneten oberen Wälzlager 7. Die Außenringe 7.2, 8.2 der Wälzlager 7, 8 weisen an den jeweils außenliegenden, also voneinander abgewandten Stirnseiten der Außenringe 7.2, 8.2 Anlageflächen 7.4, 8.4 mit einer erhöhten Rauigkeit auf.

Die einander zugewandten Stirnseiten 7.5, 8.5 der Außenringe 7.2, 8.2 dienen nicht der axialen Kraftübertragung und weisen daher eine Rauigkeit auf, die von der üblichen Herstellung des Außenrings vorgegeben ist und keine besondere Behandlung erfährt. Diese Rauigkeiten liegen üblicherweise in einem Bereich von 1,0 µm <= Rz <= 3,0 µm bzw. die Profiltiefe Pt liegt in einem Bereich 3,0 µm <= Pt <= 5,0 µm. Werden die Oberflächen zum Erhöhen der Präzision zusätzlich noch geschliffen, fallen die Rz-Werte niedriger aus.

In Fig. 3D ist ein Federelement 11 dargestellt, das zwischen dem unteren Wälzlager aus Fig. 3C und dem Gehäuse 10 aus Fig. 3B eingelegt ist. Sowohl die obere, dem Wälzlager 8 zugewandte axiale Kontaktflächen 11.1 als auch die untere, dem Gehäuse 10 zugewandte Kontaktfläche 11.2 weisen eine erhöhte Rauigkeit auf.

Diese erhöhte Rauigkeit in dem Ausführungsbeispiel nach Fig. 3A-3D wird dadurch erreicht, dass die Profiltiefe mindestens einer der Kontaktflächen mindestens 8,0 µm beträgt, vorzugsweise 12 µm - 18 µm.

In Fig. 4 ist eine an sich bekannte Lageranordnung des oberen Wälzlagers 7' dargestellt, bei der eine nach unten gerichtete Fläche des oberen Wälzlagers 7' die axiale Auflagefläche 7.4' ist, die dann aufgeraut ist. Die axiale Gegenfläche 10.1 am Gehäuse 10 ist ebenfalls aufgeraut. Die axiale Auflagefläche 7.4' ist an einem mit dem Außenring 7.2 verbundenen Flansch 7.6 angeordnet. Das Wälzlager mit Flansch wird also direkt im Kopfgehäuse 10 geführt.

Der Kraftfluss geht über den Flansch 7.6 in das Gehäuse 10. Dabei wird der Flansch 7.6 des als Kugellager ausgebildeten Wälzlagers 7' eingeklemmt.

Die axialen Flächen 7.4' des Flansches 7.6 können ebenfalls aufgeraut werden und bieten somit mehr Auswahl bei der Festlegung der Vorspannung oder mehr Sicherheit gegenüber ungewollten Bewegungen des Kugellagers.

Da mit der Aufrauung insbesondere Reibkräfte übertragen werden, die senkrecht zum Kraftfluss ausgebildet sind, kann auch die untere Fläche des Flansches aufgeraut und die obere nicht-aufgeraut sein. Beide Flächen des Flansches 7.6 wären in Kontakt mit dem Gehäuse 10, die aufgeraute untere Fläche würde jedoch höhere Reibkräfte übertragen als die nach oben gerichtete (nichtaufgeraute) Fläche.

Die gezielte Erhöhung der Reibungskoeffizienten der Anlageflächen auf der Stirnseite des Außenrings der Wälzlager, der Gegenflächen im Gehäuse und für den Fall, dass sich zwischen dem Gehäuse und dem Wälzlager ein weiteres Bauteil wie beispielsweise eine Passscheibe, eine Wellfederscheibe oder ähnliches befindet, auch die Erhöhung des Reibungskoeffizienten an der Ober- und Unterseite dieses Bauteils vermindert die Bewegung der beweglichen Teile in der Lageranordnung.

So kann die Aufrauung nur der stirnseitigen Fläche des Wälzlageraußenringes ausreichen. Auch die Aufrauung nur der stirnseitigen Auflagefläche im Gehäuse kann ausreichen.

Weiterhin kann die beidseitige Aufrauung eines Bauteils, das zwischen dem Kugellageraußenring und dem Gehäuse positioniert ist, wie beispielsweise ein Pass- oder Wellfederscheibe, ausreichen.

Auch Kombinationen sind möglich. So ist die Aufrauung der stirnseitigen Fläche des Wälzlageraußenringes in Verbindung mit der Aufrauung der stirnseitigen Auflagefläche des Gehäuses möglich und/oder oder beide Wälzlager können aufgeraute Flächen aufweisen.

Auch die Aufrauung der stirnseitigen Fläche des Wälzlageraußenringes in Verbindung mit der Aufrauung der stirnseitigen Auflagefläche des Gehäuses sowie zusätzlicher Bauteile wie beispielsweise einer Pass- und/oder Wellfederscheibe kann eingesetzt werden.

Statt auf den Rauigkeitswert der Oberfläche der Bauteile einzuwirken, kann eine Scheibe aus einem Werkstoff mit hohem Reibungskoeffizienten zwischen der Stirnseite des Außenrings und dem Gehäuse zum Einsatz kommt. Als Werkstoff kommt insbesondere PEEK oder Zirkoniumdioxid in Betracht.

## Patentansprüche

1. Verfahren zum Herstellen eines dentalen Hand- oder Winkelstücks mit einem rotierenden Werkzeug (2), welches über ein in einem Gehäuse (10) angeordnetes rotierendes Antriebselement (4) angetrieben ist, wobei das rotierende Antriebselement (4) mittels eines radialen oberen Wälzlagers (7) und eines radialen unteren Wälzlagers (8) im Gehäuse (10) gelagert ist, wobei jedes Wälzlager (7, 8) eine axiale Anlagefläche (7.4, 8.4), und das Gehäuse (9, 10) axiale Gegenflächen (9.1, 10.1) aufweist und wobei die Wälzlager (7, 8) über mindestens ein Federelement (11) mit axialen Kontaktflächen (11.1, 11.2) gegenüber dem Gehäuse (9, 10) axial vorgespannt sind, jedes Wälzlager (7, 8) einen Außenring (7.2, 8.2) mit einer Stirnseite (7.4, 8.4) aufweist, die zumindest teilweise als axiale Anlagefläche (7.4, 8.4) ausgebildet ist und mit der Gegenfläche (9.1, 10.1) des Gehäuses (9, 10) im Kontakt steht,
wobei die axiale Lagerung jedes Außenrings (7.2, 8.2) der Wälzlager (7, 8) über die axiale Anlagefläche (7.4, 8.4) am Außenring (7.2, 8.2) erfolgt, die an der axialen Gegenfläche (9.1, 10.1) in dem Gehäuse (9,10) im Falle des oberen Wälzlagers (7) unmittelbar und im Fall des unteren Wälzlagers (8) mittelbar unter Zwischenschaltung des Federelements (11) anliegt, wobei der Reibungskoeffizient für die Haftreibung der axialen Anlagefläche (7.4) auf der Stirnseite des Außenrings (7.2) des oberen Wälzlagers (7) zu der Gegenfläche (9.1) am Gehäuse (9, 10) und der axialen Anlagefläche (8.4) auf der Stirnseite des Außenrings (8.2) des unteren Wälzlagers (8) und der Gegenfläche (10.1) am Gehäuse (9, 10) zu den Kontaktflächen (11.1, 11.2) des Federelements so ausgebildet wird, dass er mindestens 0,25 im ungeschmierten Zustand beträgt,
**dadurch gekennzeichnet, dass**
sowohl die axialen Anlageflächen (7.4, 8.4) auf den Stirnseiten (7.4, 8.4) der Außenringe (7.2, 8.2) als auch die Gegenflächen (9.1, 10.1) am Gehäuse (9, 10) aufgeraut werden.

2. Verfahren nach Anspruch 1, **dadurch gekennzeichnet, dass** die sich berührenden axialen Anlageflächen (7.4, 8.4) auf den Stirnseiten (7.4 8.4) der Außenringe (7.2, 8.2) und die Gegenflächen (9.1, 10.1) am Gehäuse (9, 10) metallisch sind, vorzugsweise aus Stahl.

3. Verfahren nach Anspruch 1 oder 2, **dadurch gekennzeichnet, dass** die sich berührenden axialen Anlageflächen (7.4, 8.4) auf den Stirnseiten der Außenringe (7.2, 8.2) und die Gegenflächen (9.1, 10.1) am Gehäuse (9, 10) eine Profiltiefe von mindestens 8,0 µm und/oder eine Rauigkeit Rz von mindestens 4,0 µm aufweisen, insbesondere liegt die Profiltiefe in einem Bereich von 12 µm bis 18 µm und/oder liegt die Rauigkeit Rz in einem Bereich von 8 µm bis 14 µm.

4. Verfahren nach einem der Ansprüche 1 bis 3, **dadurch gekennzeichnet, dass** der Reibungskoeffizient durch Auswahl der Materialpartner wie folgt bereitgestellt wird:
• Metall/Metall
• Metall/Keramik
• Keramik/Keramik
• Kunststoff/Metall
• Kunststoff/Keramik

5. Verfahren nach einem der Ansprüche 1 bis 4, **dadurch gekennzeichnet, dass** mindestens eine der sich berührenden axialen Anlageflächen (7.4, 8.4) auf den Stirnseiten der Außenringe (7.2, 8.2) und die Gegenflächen (9.1, 10.1) am Gehäuse (9, 10) mit einer Beschichtung auf einem Grundwerkstoff ausgebildet wird.

6. Verfahren nach einem der Ansprüche 1 bis 5, **dadurch gekennzeichnet, dass** das Federelement (11), insbesondere eine Wellfederscheibe (11), einen höheren Reibungskoeffizienten mit der axialen Anlagefläche (8.4) auf der Stirnseite des Außenrings (8.2) des unteren Wälzlagers und der Gegenfläche (10.1) am Gehäuse (9, 10) als die Anlagefläche (7.4) auf der Stirnseite des Außenrings (7.2) des oberen Wälzlagers (7) und die Gegenfläche (9.1) am Gehäuse (9, 10) zueinander aufweist.

7. Verfahren nach Anspruch 6, **dadurch gekennzeichnet, dass** die Wellfederscheibe (11) aus einem Werkstoff mit höherem Reibungskoeffizienten an den axialen Kontaktflächen (11.1, 11.2) zu der Anlagefläche (8.4) auf der Stirnseite des Außenrings (8.2) des unteren Wälzlagers (8) und zu der Gegenfläche (10.1) am Gehäuse (9, 10) besteht, insbesondere aus Kunststoff oder Keramik.

## Claims

1. A method for producing a dental hand or angle piece having a rotating tool (2) which is driven via a rotating drive element (4) arranged in a housing (10), the rotating drive element (4) being mounted in the housing (10) by means of a radial upper rolling bearing (7) and a radial lower rolling bearing (8), each rolling bearing (7, 8) having an axial contact surface (7.4, 8.4) and the housing (9, 10) having axial mating surfaces (9.1, 10.1) and the rolling bearings (7, 8) being axially preloaded relative to the housing (9, 10) via at least one spring element (11) having axial contact surfaces (11.1, 11.2),
each rolling bearing (7, 8) having an outer ring (7.2, 8.2) with an end face (7.4, 8.4) which is at least partially designed as an axial contact surface (7.4, 8.4) and which is in contact with the mating surface (9.1, 10.1) of the housing (9, 10),
the axial bearing of each outer ring (7.2, 8.2) of the rolling bearings (7, 8) taking place via the axial contact surface (7.4, 8.4) on the outer ring (7.2, 8.2), which directly abuts the axial mating surface (9.1, 10.1) in the housing (9, 10) in the case of the upper rolling bearing (7) and indirectly abuts the same in the case of the lower rolling bearing (8) with the interposition of the spring element (11),
the coefficient of friction for the static friction of the axial contact surface (7.4) on the end face of the outer ring (7.2) of the upper rolling bearing (7) to the mating surface (9.1) on the housing (9, 10) and the axial contact surface (8.4) on the end face of the outer ring (8.2) of the lower rolling bearing (8) and the mating surface (10.1) on the housing (9, 10) to the contact surfaces (11.1, 11.2) of the spring element being formed such that it is at least 0.25 in the unlubricated state,
**characterised in that**
both the axial contact surfaces (7.4, 8.4) on the end faces (7.4, 8.4) of the outer rings (7.2, 8.2) and the mating surfaces (9.1, 10.1) on the housing (9, 10) are roughened.

2. The method according to claim 1, **characterised in that** the touching axial contact surfaces (7.4, 8.4) on the end faces (7.4, 8.4) of the outer rings (7.2, 8.2) and the mating surfaces (9.1, 10.1) on the housing (9, 10) are metallic, preferably made of steel.

3. The method according to claim 1 or 2, **characterised in that** the touching axial contact surfaces (7.4, 8.4) on the end faces of the outer rings (7.2, 8.2) and the mating surfaces (9.1, 10.1) on the housing (9, 10) have a profile depth of at least 8.0 µm and/or a roughness Rz of at least 4.0 µm, in particular the profile depth is in a range from 12 µm to 18 µm and/or the roughness Rz is in a range from 8 µm to 14 µm.

4. The method according to one of claims 1 to 3, **characterised in that** the coefficient of friction is provided by selecting the material pairs as follows:
• metal/metal
• metal/ceramic
• ceramic/ceramic
• plastic/metal
• plastic/ceramic

5. The method according to one of claims 1 to 4, **characterised in that** at least one of the touching axial contact surfaces (7.4, 8.4) on the end faces of the outer rings (7.2, 8.2) and the mating surfaces (9.1, 10.1) on the housing (9, 10) is formed with a coating on a base material.

6. The method according to one of claims 1 to 5, **characterised in that** the spring element (11), in particular a wave spring washer (11), has a higher coefficient of friction with the axial contact surface (8.4) on the end face of the outer ring (8.2) of the lower rolling bearing and the mating surface (10.1) on the housing (9, 10) than the contact surface (7.4) on the end face of the outer ring (7.2) of the upper rolling bearing (7) and the mating surface (9.1) on the housing (9, 10) have in relation to one another.

7. The method according to claim 6, **characterised in that** the wave spring washer (11) consists of a material, in particular of plastic or ceramic, with a higher coefficient of friction on the axial contact surfaces (11.1, 11.2) to the contact surface (8.4) on the end face of the outer ring (8.2) of the lower rolling bearing (8) and to the mating surface (10.1) on the housing (9, 10).

## Revendications

1. Procédé de fabrication d'une pièce à main ou d'angle dentaire à l'aide d'un outil (2) rotatif, lequel est entraîné au moyen d'un élément d'entraînement (4) rotatif disposé dans un boîtier (10), l'élément d'entraînement (4) rotatif, au moyen d'un roulement à rouleaux (7) supérieur radial et d'un roulement à rouleaux (8) inférieur radial, étant monté dans le boîtier (10), chaque roulement à rouleaux (7, 8) comportant une surface d'appui (7.4, 8.4) axiale et le boîtier (9, 10) comportant des contre-surfaces (9.1, 10.1) axiales et les roulements à rouleaux (7, 8) étant précontraints axialement, au moyen d'au moins un élément élastique (11), avec des surfaces de contact (11.1, 11.2) axiales par rapport au boîtier (9, 10),
chaque roulement à rouleaux (7, 8) comportant une bague extérieure (7.2, 8.2) comprenant une face frontale (7.4, 8.4), laquelle est au moins partiellement conçue sous la forme d'une surface d'appui (7.4, 8.4) axiale et est en contact avec la contre-surface (9.1, 10.1) du boîtier (9, 10),
le logement axial de chaque bague extérieure (7.2, 8.2) des roulements à rouleaux (7, 8) s'effectuant au moyen de la surface d'appui (7.4, 8.4) axiale sur la bague extérieure (7.2, 8.2), laquelle est appliquée directement à la contre-surface (9.1, 10.1) axiale dans le boîtier (9,10) dans le cas du roulement à rouleaux (7) supérieur et indirectement dans le cas du roulement à rouleaux (8) inférieur par l'intermédiaire de l'élément élastique (11),
le coefficient de frottement pour le frottement d'adhérence de la surface d'appui (7.4) axiale sur la face frontale de la bague extérieure (7.2) du roulement à rouleaux (7) supérieur sur la contre-surface (9.1) sur le boîtier (9, 10) et la surface d'appui (8.4) axiale sur la face frontale de la bague extérieure (8.2) du roulement à rouleaux (8) inférieur et la contre-surface (10.1) sur le boîtier (9, 10) par rapport aux surfaces de contact (11.1, 11.2) de l'élément élastique étant conçus de telle sorte qu'il est d'au moins 0,25 à l'état non lubrifié,
**caractérisé en ce que**
les surfaces d'appui (7.4, 8.4) axiales sur les faces frontales (7.4, 8.4) des bagues extérieures (7.2, 8.2) et les contre-surfaces (9.1, 10.1) sur le boîtier (9, 10) sont rendues rugueuses.

2. Procédé selon la revendication 1, **caractérisé en ce que** les surfaces d'appui (7.4, 8.4) axiales, lesquelles sont en contact les unes avec les autres sur les faces frontales (7.4, 8.4) des bagues extérieures (7.2, 8.2) et les contre-surfaces (9.1, 10.1) sur le boîtier (9, 10) sont métalliques, de préférence en acier.

3. Procédé selon la revendication 1 ou 2, **caractérisé en ce que** les surfaces d'appui (7.4, 8.4) axiales, lesquelles sont en contact les unes avec les autres sur les faces frontales des bagues extérieures (7.2, 8.2) et les contre-surfaces (9.1, 10.1) sur le boîtier (9, 10) présentent une profondeur de profil d'au moins 8,0 µm et/ou une rugosité Rz d'au moins 4,0 µm, en particulier la profondeur de profil étant comprise entre 12 µm et 18 µm et/ou la rugosité Rz étant comprise entre 8 µm et 14 µm.

4. Procédé selon l'une quelconque des revendications 1 à 3, **caractérisé en ce que** le coefficient de frottement est fourni par sélection des matières partenaires comme suit :
• Métal/métal
• Métal/céramique
• Céramique/céramique
• Matière plastique/métal
• Matière plastique/céramique

5. Procédé selon l'une quelconque des revendications 1 à 4, **caractérisé en ce qu'**au moins une des surfaces d'appui (7.4, 8.4) axiales, lesquelles sont en contact les unes avec les autres sur les faces frontales des bagues extérieures (7.2, 8.2) et sur les contre-surfaces (9.1, 10.1) sur le boîtier (9, 10), est formée d'un revêtement sur une matière de base.

6. Procédé selon l'une quelconque des revendications 1 à 5, **caractérisé en ce que** l'élément élastique (11), en particulier une rondelle élastique ondulée (11), présente un coefficient de frottement supérieur avec la surface d'appui (8.4) axiale sur la face frontale de la bague extérieure (8.2) du roulement à rouleaux inférieur et la contre-surface (10.1) sur le boîtier (9, 10) au coefficient de frottement avec la surface d'appui (7.4) sur la face frontale de la bague extérieure (7.2) du roulement à rouleaux (7) supérieur et la contre-surface (9.1) sur le boîtier (9, 10) les unes aux autres.

7. Procédé selon la revendication 6, **caractérisé en ce que** la rondelle élastique ondulée (11) se compose d'une matière à coefficient de frottement supérieur sur les surfaces de contact (11.1, 11.2) axiales par rapport à la surface d'appui (8.4) sur la face frontale de la bague extérieure (8.2) du roulement à rouleaux (8) inférieur et par rapport à la contre-surface (10.1) sur le boîtier (9, 10), en particulier en matière plastique ou en céramique.
